# EUROPÄISCHE PATENTANMELDUNG

(11) **EP 0 935 096 A1**
(43) Veröffentlichungstag der Anmeldung: **11.08.1999**
(21) Anmeldenummer: 98124496.5
(22) Anmeldetag: 29.12.1998
(51) Int. Cl.: F23C 9/08, F23L 15/04

(54) **Verfahren und Vorrichtung zum Zuführen von Verbrennungsluft zu einem Brenner einer Feuerungsanlage**

(30) Priorität: 07.02.1998 DE 19804989; 07.02.1998 DE 19804993
(71) Anmelder: Deutsches Zentrum für Luft- und Raumfahrt e.V., 53175 Bonn (DE)
(72) Erfinder: Farago, Zoltan, 74747 Ravenstein (DE); Adis, Erich, 74239 Hardthausen-Gochsen (DE)
(74) Vertreter: Hoeger, Stellrecht & Partner

(57) **Zusammenfassung**

Um ein Verfahren zum Zuführen von Verbrennungsluft zu einem Brenner (102) einer Feuerungsanlage, bei dem der Verbrennungsluft vor dem Eintritt in den Brenner ein Teil eines Abgases der Feuerungsanlage zugemischt wird, zu schaffen, mit dem eine wirksamere Verringerung der Stickoxidbildung im Brenner als bei bekannten Verfahren erreichbar ist, wird erfindungsgemäß vorgeschlagen, daß das Abgas der Feuerungsanlage durch einen Restwärmetauscher (112) geführt wird, wobei das Abgas gekühlt wird, und daß ein Teil des gekühlten Abgases (157) der Verbrennungsluft zugemischt wird.

## Beschreibung

Die vorliegende Erfindung betrifft ein Verfahren zum Zuführen von Verbrennungsluft zu einem Brenner einer Feuerungsanlage, bei dem der Verbrennungsluft vor dem Eintritt in den Brenner ein Teil eines Abgases der Feuerungsanlage zugemischt wird.

Ferner betrifft die vorliegende Erfindung eine Vorrichtung zum Zuführen von Verbrennungsluft zu einem Brenner einer Feuerungsanlage, umfassend eine Einrichtung zum Zumischen eines Teils eines Abgases der Feuerungsanlage zu der Verbrennungsluft vor deren Eintritt in den Brenner.

Solche Verfahren und Vorrichtungen sind bekannt.

Die Zumischung eines Teils des Abgases der Feuerungsanlage zu der Verbrennungsluft vor deren Eintritt in den Brenner dient dabei dem Zweck, die Stickoxidbildung bei der nachfolgenden Verbrennung in dem Brenner der Feuerungsanlage zu reduzieren.

Durch die Zumischung des Abgases zu der Verbrennungsluft wird nämlich der prozentuale Massenanteil der inerten Bestandteile der Verbrennungsluft auf Kosten des prozentualen Sauerstoff-Massenanteils erhöht, was eine Verringerung der Flammentemperatur des Brenners zur Folge hat. Bei einer geringeren Temperatur und somit geringeren Reaktionsgeschwindigkeiten wird ein geringerer Stickoxidanteil erzeugt, da die Bildungsreaktionen der Stickoxide vergleichsweise langsam ablaufen.

Bei den aus dem Stand der Technik bekannten Verfahren und Vorrichtungen zum Zuführen von Verbrennungsluft wird der der Verbrennungsluft zuzumischende Teil des Abgases unmittelbar nach dem Austritt des heißen Abgases aus der Feuerungsanlage von einer zu einem Schornstein der Feuerungsanlage führenden Abgasleitung abgezweigt. Das der Verbrennungsluft zugemischte Abgas weist also die hohe Temperatur auf, die am Abgasaustritt der Feuerungsanlage herrscht (beispielsweise 250°C).

Dies ist von Nachteil, da durch die Zumischung von heißem Abgas das dem Brenner zugeführte Verbrennungsluft-Abgas-Gemisch aufgeheizt wird, was zu einer Erhöhung der Flammentemperatur des Brenners führt und somit dem durch das Zumischen des Abgases beabsichtigten Effekt entgegenwirkt. Um eine spürbare Verringerung der Flammentemperatur zu erzielen, muß daher ein vergleichsweise großer Anteil des Massenstroms des Abgases der Feuerungsanlage, in der Größenordnung von 10 % des Gesamt-Abgasmassenstroms, aus der Abgasleitung abgezweigt und der Verbrennungsluft zugemischt werden.

Der vorliegenden Erfindung liegt daher die Aufgabe zugrunde, ein Verfahren der eingangs genannten Art zu schaffen, mit dem eine wirksamere Verringerung der Stickoxidbildung im Brenner erreichbar ist.

Diese Aufgabe wird bei einem Verfahren mit den Merkmalen des Oberbegriffs von Anspruch 1 erfindungsgemäß dadurch gelöst, daß das Abgas der Feuerungsanlage durch einen Restwärmetauscher geführt wird, wobei das Abgas gekühlt wird, und daß ein Teil des gekühlten Abgases der Verbrennungsluft zugemischt wird.

Das erfindungsgemäße Konzept bietet den Vorteil, daß das der Verbrennungsluft zugemischte Abgas eine geringere Temperatur aufweist (beispielsweise ungefähr 30°C) als bei den Verfahren gemäß dem Stand der Technik, so daß eine Aufheizung des Verbrennungsluft-Abgas-Gemisches, das in den Brenner eintritt, vermieden und eine effiziente Absenkung der Flammentemperatur des Brenners erreicht wird.

Mit dem erfindungsgemäßen Verfahren kann demnach mit demselben Massenstromanteil des zugemischten Abgases wie beim Stand der Technik eine stärkere Verringerung der Flammentemperatur erzielt werden.

Das Abgas wird in dem Restwärmetauscher vorzugsweise auf eine Temperatur unterhalb der Abgastaupunkttemperatur, insbesondere auf eine Temperatur von höchstens 30°C oder auf ungefähr Umgebungstemperatur, abgekühlt. Anschließend wird ein Teil des auf die vorstehend genannten Temperaturen gekühlten Abgases der Verbrennungsluft zugemischt.

Die Flammentemperatur des Brenners sollte jedoch nicht zu stark absinken, da bei einer zu niedrigen Flammentemperatur außer der Stickoxidbildung auch die Aufoxidation von Kohlenmonoxid zu Kohlendioxid zu stark verlangsamt wird, was zu einer Erhöhung des Kohlenmonoxidanteils im Abgas führt und daher unerwünscht ist.

Bei einer bevorzugten Ausgestaltung der Erfindung ist deshalb vorgesehen, daß der der Verbrennungsluft zugemischte Teil des Abgases ein Massenprozent bis fünf Massenprozente, vorzugsweise ein Massenprozent bis drei Massenprozente, des Abgases der Feuerungsanlage beträgt. In diesem Fall ist der der Verbrennungsluft zugemischte Teil des Abgases also geringer als bei den aus dem Stand der Technik bekannten Verfahren. Dies bringt die Vorteile mit sich, daß die Leistungsaufnahme der im Brenner vorgesehenen Lüfterräder, die das Verbrennungsluft-Abgas-Gemisch in den Feuerraum des Brenners fördern, verringert wird und daß Startschwierigkeiten der Verbrennungsluftzufuhr zu dem Brenner zu Beginn der Betriebsphasen des Brenners verringert werden.

Da der Gesamt-Abgasmassenstrom der Feuerungsanlage im wesentlichen dem Massenstrom der zugeführten Verbrennungsluft entspricht, beträgt der der Verbrennungsluft zugemischte Teil des Abgases vorteilhafterweise ungefähr ein Massenprozent bis ungefähr fünf Massenprozente, vorzugsweise ungefähr ein Massenprozent bis ungefähr drei Massenprozente, der der Feuerungsanlage zugeführten Verbrennungsluft.

Günstig ist es, wenn der zugemischte Teil des Abgases im wesentlichen parallel zur Strömungsrichtung der Verbrennungsluft in die Verbrennungsluft eingeleitet wird. In diesem Fall stellen sich in der Abgas-Abzweigleitung und in der Verbrennungsluftzufuhr, in die die Abgas-Abzweigleitung einmündet, annähernd gleiche Strömungsgeschwindigkeiten des Abgases bzw. der Verbrennungsluft ein. Da auch die Dichten des Abgases und der Verbrennungsluft im wesentlichen gleich groß sind, hängt das Verhältnis des Abgasmassenstroms zu dem Verbrennungsluftmassenstrom im wesentlichen nur von dem Verhältnis der jeweils kleinsten Querschnitte der Abgas-Abzweigleitung einerseits und der Verbrennungsluftzufuhr andererseits ab und ist daher auf einfache Weise einstellbar.

Besonders günstig ist es, wenn der der Verbrennungsluft zuzumischende Teil des Abgases an der engsten Stelle der Verbrennungsluftzufuhr in die Verbrennungsluft eingeleitet wird. Dadurch wird erreicht, daß das Massenstromverhältnis zwischen dem zugemischten Abgas und der Verbrennungsluft von Umwelteinflüssen, insbesondere der Umgebungstemperatur, im wesentlichen unabhängig wird.

Aus demselben Grund ist es von Vorteil, wenn die Mündungsöffnung der Abgas-Abzweigleitung in die Verbrennungsluftzufuhr die engste Stelle der Abgas-Abzweigleitung bildet.

Grundsätzlich kann vorgesehen sein, daß das Abgas in dem Restwärmetauscher Wärme an ein gasförmiges Wärmetauschmedium abgibt.

Vorzugsweise ist jedoch vorgesehen, daß das Abgas in dem Restwärmetauscher Wärme an eine Wärmetauschflüssigkeit abgibt, da der Wärmeübergang auf ein flüssiges Wärmetauschmedium rascher erfolgt und eine kleinere Wärmetauschfläche benötigt.

Besonders günstig ist es, wenn das Abgas in dem Restwärmetauscher unmittelbar mit der Warmetauschflüssigkeit in Kontakt kommt. In diesem Fall wird das Abgas in dem Restwärmetauscher nicht nur gekühlt, sondern zugleich auch gereinigt, da in dem Abgas enthaltene Schadstoffe, beispielsweise SO₂, durch die Wärmetauschflüssigkeit ausgewaschen werden. Das aus dem Restwärmetauscher austretende Abgas ist somit entschwefelt, so daß die Konzentration an Schwefeloxid im Feuerraum, in den das Verbrennungsstoff-Abgas-Gemisch eintritt, herabgesetzt wird. Dadurch erhöht sich der Säuretaupunkt im Heizkessel, und die Korrosionsneigung sinkt.

Zur Erhöhung des Wirkungsgrads der Feuerungsanlage ist es von Vorteil, wenn die Verbrennungsluft vor dem Eintritt in den Brenner durch einen Luftvorwärmer geführt wird, in dem die Verbrennungsluft erwärmt wird.

Dabei ist es möglich, den zuzumischenden Teil des Abgases der Verbrennungsluft vor deren Eintritt in den Luftvorwärmer zuzumischen, wobei das zugemischte Abgas zusammen mit der Verbrennungsluft in dem Luftvorwärmer erwärmt wird.

Alternativ hierzu ist es möglich, daß der Teil des Abgases der Verbrennungsluft nach deren Austritt aus dem Luftvorwärmer zugemischt wird. Vorzugsweise wird das Abgas dabei im Restwärmetauscher so stark abgekühlt, daß das zugemischte Abgas im wesentlichen dieselbe Temperatur aufweist wie die Verbrennungsluft nach deren Austritt aus dem Luftvorwärmer (beispielsweise ungefähr 30°C).

Weichen die Abgas- und die Verbrennungslufttemperatur vor dem Vermischen voneinander ab, so kann durch eine geeignete Dosierung der Menge des zugemischten gekühlten Abgases die zur Erzielung einer gewünschten Flammentemperatur im Brenner erforderliche Temperatur des Verbrennungsluft-Abgas-Gemisches beim Eintritt in den Brenner genau eingestellt werden.

Grundsätzlich kann vorgesehen sein, daß die Verbrennungsluft in dem Luftvorwärmer Wärme aus einem gasförmigen Wärmetauschmedium aufnimmt.

Günstiger ist es jedoch, wenn die Verbrennungsluft in dem Luftvorwärmer Wärme aus einer Wärmetauschflüssigkeit aufnimmt, da der Wärmeübergang von einem flüssigen Wärmetauschmedium auf die Verbrennungsluft rascher erfolgt und eine kleinere Wärmetauschfläche benötigt.

Bei einer bevorzugten Ausgestaltung der Erfindung ist vorgesehen, daß die Verbrennungsluft in dem Luftvorwärmer unmittelbar mit der Wärmetauschflüssigkeit, insbesondere mit Wasser, in Kontakt kommt. Dadurch ist es möglich, daß die Verbrennungsluft nicht nur erwärmt, sondern zugleich auch befeuchtet wird, so daß also die Verbrennungsluft nicht nur fühlbare, sondern auch latente Wärme aufnimmt. Die Aufnahme latenter Wärme ist besonders von Vorteil, da hierdurch der Wirkungsgrad der Feuerungsanlage gesteigert wird, ohne die Flammentemperatur und damit die Stickoxidbildung zu erhöhen.

Ein zusätzlicher Vorteil der Luftbefeuchtung besteht darin, daß hierdurch die Stickoxidbildung bei der nachfolgenden Verbrennung in dem Brenner der Feuerungsanlage weiter reduziert wird.

Durch die Luftbefeuchtung wird nämlich der prozentuale Massenanteil der inerten Bestandteile der Verbrennungsluft (im wesentlichen Stickstoff und Wasser) auf Kosten des prozentualen Sauerstoff-Massenanteils erhöht, was eine weitere Verringerung der Flammentemperatur des Brenners zur Folge hat.

Außerdem kann durch die Erhöhung des Anteils inerter Bestandteile in der Verbrennungsluft der Massenstrom durch den Feuerraum des Brenners gesteigert werden, was eine höhere Strömungsgeschwindigkeit, eine stärkere Turbulenz der Strömung im Bereich der Brennerflamme und daher eine homogenere Temperaturverteilung in der Flamme zur Folge hat. Aufgrund der homogeneren Temperaturverteilung sinkt die Spitzentemperatur der Flamme und damit die Stickoxidproduktion in der Flamme.

Wird die Zumischung von Abgas zu der Verbrennungsluft mit einer Befeuchtung der Verbrennungsluft vor deren Eintritt in den Brenner kombiniert, so läßt sich eine Verringerung der Flammentemperatur um einen vorgegebenen Betrag mit einem geringeren zugemischten Abgas-Massenstrom erreichen.

Ein weiterer Vorteil der Befeuchtung der Verbrennungsluft mit Wasserdampf vor deren Eintritt in den Brenner besteht darin, daß die Konzentration von OH⁻-Radikalen, die die Aufoxidation von Kohlenmonoxid zu Kohlendioxid fördern, in der Flamme des Brenners zunimmt. Die Luftbefeuchtung erlaubt es daher, die Flammentemperatur des Brenners stärker abzusenken, ohne den Kohlenmonoxidanteil in dem Abgas der Feuerungsanlage zu erhöhen.

Die vorstehend beschriebene Kombination von Luftvorwärmung und Luftbefeuchtung wird zwar bevorzugt, doch ist es grundsätzlich möglich, die Verbrennungsluft vor deren Eintritt in den Brenner außerhalb des Luftvorwärmers zu befeuchten oder auch lediglich die Verbrennungsluft vor deren Eintritt in den Brenner zu befeuchten, ohne daß sie durch einen Luftvorwärmer geführt wird.

Bei einer bevorzugten Ausgestaltung der vorliegenden Erfindung wird im Abgas enthaltener Wasserdampf in dem Restwärmetauscher zumindest teilweise zu einem Kondensat kondensiert und das Kondensat dem Luftvorwärmer als Wärmetauschflüssigkeit zugeführt. Auf diese Weise lassen sich die Verbrennungsluftvorwärmung und -befeuchtung einerseits und die Nutzung der Restwärme des Abgases der Feuerungsanlage andererseits in vorteilhafter Weise miteinander kombinieren.

In dem Restwärmetauscher wird das Abgas auf eine Temperatur unterhalb der Abgastaupunkttemperatur gekühlt, um eine zumindest teilweise Kondensation des im Abgas enthaltenen Wasserdampfs zu bewirken und so außer der fühlbaren Wärme des Abgases auch die im Abgas enthaltene latente Wärme zu nutzen. Besonders günstig ist es, wenn das Abgas im Restwärmetauscher auf eine Temperatur unterhalb von ungefähr 30°C oder auf ungefähr Umgebungstemperatur gekühlt wird.

Für die Nutzung der latenten Abgaswärme kommt es darauf an, daß nicht lediglich die Temperatur des Kondensats, sondern die mittlere Temperatur des Abgases selbst beim Austritt aus dem Restwärmetauscher unterhalb der Abgastaupunkttemperatur liegt.

Vorzugsweise wird das Abgas in dem Restwärmetauscher so stark abgekühlt, daß mindestens ungefähr 25 %, insbesondere mindestens ungefähr 50 %, der theoretisch aus dem Abgas kondensierbaren Kondensatmenge in dem Restwärmetauscher netto kondensiert werden. Als theoretisch kondensierbare Kondensatmenge gilt dabei die Kondensatmenge, die aus dem Abgas bei einer Abkühlung auf 25°C kondensiert werden würde.

Dadurch, daß die vom Abgas an das Kondensat abgegebene fühlbare und latente Wärme in dem Luftvorwärmer an die Verbrennungsluft weitergegeben wird, fungiert der Luftvorwärmer als Wärmesenke, so daß die Kondensattemperatur herabgesetzt und somit die Effizienz der Brennwertnutzung erhöht wird.

Mit der Kondensattemperatur sinkt auch die Temperatur, auf welche das Abgas in dem Restwärmetauscher gekühlt wird. Die Temperatur des Abgases bei Austritt aus dem Restwärmetauscher wird als Kondensationstemperatur bezeichnet.

Außerdem wird durch die Befeuchtung der Verbrennungsluft die Menge des in dem Restwärmetauscher kondensierenden Kondensats erhöht (typischerweise verdoppelt), da das Abgas der Feuerungsanlage aufgrund der Luftbefeuchtung mit einem größeren Wasserdampfanteil beladen ist. Dadurch wird der Übergang von Wärme aus dem Abgas an das Kondensat im Restwärmetauscher verbessert und die Wirksamkeit des Restwärmetauschers gesteigert.

Um einen kontinuierlichen Betrieb der Feuerungsanlage zu ermöglichen, wird das Kondensat vorteilhafterweise in einem Kondensatkreislauf geführt.

Der Kondensatkreislauf umfaßt sowohl den Restwärmetauscher als auch den Luftvorwärmer.

Das Kondensat wird im Kreislauf durch den Restwärmetauscher und durch den Luftvorwärmer geführt, wobei es im Restwärmetauscher Wärme aus dem Abgas aufnimmt und im Luftvorwärmer Wärme an die Verbrennungsluft abgibt.

Dabei kommen die Verbrennungsluft in dem Luftvorwärmer und das Abgas in dem Restwärmetauscher unmittelbar mit dem im Kreislauf geführten Kondensat in Kontakt.

Vorzugsweise sind in dem Kondensatkreislauf der Restwärmetauscher und der Luftvorwärmer parallel zueinander geschaltet, d. h. der Restwärmetauscher und der Luftvorwärmer sind in zwei Zweigen des Kondensatkreislaufs angeordnet, welche parallel zueinander von jeweils einem Teilstrom des Kondensats durchströmt werden.

Der Kondensatkreislauf kann insbesondere eine erste Schleife, welche den Restwärmetauscher umfaßt, und eine zweite Schleife, welche den Luftvorwärmer umfaßt, aufweisen, wobei die erste Schleife und die zweite Schleife einen gemeinsamen, von dem Kondensat durchströmten Abschnitt aufweisen.

Vorteilhafterweise wird eine den Kondensatkreislauf antreibende Kondensatpumpe in diesem gemeinsamen Abschnitt der beiden Schleifen des Kondensatkreislaufs angeordnet, so daß die Strömung des Kondensats durch beide Schleifen des Kreislaufs mittels einer einzigen Kondensatpumpe angetrieben werden kann.

Ferner ist es günstig, wenn ein Kondensatfilter zur Reinigung des Kondensats in dem gemeinsamen Abschnitt beider Schleifen des Kondensatkreislaufs angeordnet ist, da in diesem Fall ein einziges Kondensatfilter ausreicht, um das durch die beiden Schleifen des Kondensatkreislaufs strömende Kondensat zu reinigen.

Durch die Abgabe von Wärme im Luftvorwärmer vermindert sich die Kondensattemperatur und damit die Kondensationstemperatur im Restwärmetauscher (je nach Außentemperatur) um ungefähr 2K bis 4K, was eine bessere Brennwertnutzung zur Folge hat.

Durch die Verringerung der Kondensattemperatur können beispielsweise bei einer Außentemperatur von 0°C ungefähr 1,5 %, bei einer Außentemperatur von -20°C ungefähr 2,5 % des oberen Heizwerts nach DIN 5499 als Kondensatwärme zusätzlich genutzt werden. Bezogen auf den sogenannten Restwert, das heißt den Unterschied zwischen dem oberen und dem unteren Heizwert, beträgt der prozentuale Anteil der zusätzlich nutzbaren Kondensationswärme das 5- bis 10-fache der vorstehend genannten Werte.

Je niedriger die Außentemperatur ist, um so höher sind die Heizmitteltemperaturen, und um so höher ist die Kondensationstemperatur. So steigt bei sinkender Außentemperatur der Wirkungsgradgewinn der Feuerungsanlage überproportional an.

Durch die Abkühlung des Kondensats im Luftvorwärmer kann bei Außentemperaturen im Bereich von 0°C bis 10°C die im Restwärmetauscher aus dem Abgas netto abgeschiedene Kondensatmenge um 10 % bis 20 % erhöht werden. Bei Außentemperaturen unter ungefähr -5°C kann die aus dem Abgas abgeschiedene Kondensatmenge vervielfacht werden.

Wird das Kondensat in dem Luftvorwärmer teilweise verdampft, so daß die Verbrennungsluft in dem Luftvorwärmer befeuchtet wird, so erhöht sich ferner der Wasserdampfgehalt des Abgases und damit die Abgastaupunkttemperatur. Auch hierdurch erhöht sich die Menge des in dem Restwärmetauscher netto gebildeten Kondensats, was eine Verbesserung der Wärmeübertragung im Restwärmetauscher mit sich bringt.

Günstig ist es, wenn in dem Restwärmetauscher und in dem Luftvorwärmer aus dem Kondensat jeweils ein Kondensatspray, vorzugsweise ein monodisperses Kondensatspray, erzeugt wird. In diesem Fall dient die Oberfläche des Kondensatsprays als Wärmetauscherfläche zum Austausch von Wärme mit dem Abgas bzw. der Verbrennungsluft.

Ein monodisperses Kondensatspray wird in diesem Zusammenhang mit Hilfe des Tropfengrößenspektrums wie folgt definiert:

Es sei d_{0,05} der Tropfendurchmesser, für den gilt, daß alle Tropfen des Kondensatsprays, deren Durchmesser kleiner ist als dieser Durchmesser, zusammen 5 % des Flüssigkeitsvolumens des Sprays beinhalten.

Ferner sei d_{0,95} der Tropfendurchmesser, für den gilt, daß alle Tropfen des Kondensatsprays, deren Durchmesser größer ist als dieser Durchmesser, zusammen 5 % des Flüssigkeitsvolumens des Sprays beinhalten.

Dann soll ein Kondensatspray als monodispers gelten, wenn das Verhältnis des Durchmessers d_{0,95} zu dem Durchmesser d_{0,05} kleiner ist als ungefähr 1,2.

Ein monodisperses Kondensatspray weist also eine sehr schmale Tropfengrößenverteilung auf. Der mittlere Tropfendurchmesser kann daher so gewählt werden, daß er nur knapp oberhalb des Mindestdurchmessers liegt, ab dem ein Kondensattropfen nicht mehr vom Verbrennungsluftstrom mitgerissen wird, weil es in dem Kondensatspray nur wenige Tropfen gibt, die einen wesentlich kleineren Durchmesser als den mittleren Tropfendurchmesser aufweisen.

Mit der Verbrennungsluft mitgerissene Tropfen würden in dem Brenner Ablagerungen und Korrosion verursachen, weshalb sie durch eine geeignete Nachbehandlung (Überhitzung und/oder Tropfenabscheidung) aus der Verbrennungsluft entfernt werden müßten.

Wird in dem Luftvorwärmer ein monodisperses Kondensatspray erzeugt, so kann jedoch auf Tropfenabscheider oder eine Überhitzung der Verbrennungsluft verzichtet werden und die im Luftvorwärmer erwärmte Verbrennungsluft unmittelbar dem Brenner der Feuerungsanlage zugeführt werden.

In entsprechender Weise würden mit dem Abgas aus dem Restwärmetauscher mitgerissene Tropfen in dem Schornstein der Feuerungsanlage Ablagerungen und Korrosion verursachen, weshalb sie durch Tropfenabscheider aus dem Abgas entfernt werden müßten.

Wird in dem Restwärmetauscher ein monodisperses Kondensatspray erzeugt, so kann jedoch auf Tropfenabscheider verzichtet werden und das im Restwärmetauscher abgekühlte Abgas unmittelbar dem Schornstein der Feuerungsanlage zugeführt werden.

Da es andererseits auch nur relativ wenige Tropfen mit einem deutlich größeren Durchmesser als dem mittleren Tropfendurchmesser in dem Kondensatspray gibt, bietet das monodisperse Kondensatspray überdies eine sehr große spezifische Wärmetauschfläche.

Durch den guten Wärmeübergang zwischen dem Kondensatspray und dem Abgas im Restwärmetauscher bzw. der Verbrennungsluft im Luftvorwärmer kann der Druckabfall im Restwärmetauscher bzw. im Luftvorwärmer gering gehalten werden.

Die Abgas-Endtemperatur im Restwärmetauscher liegt bei Verwendung eines Kondensatsprays nur wenige Zehntel-Kelvin über der Kondensattemperatur.

Vorzugsweise wird also das Kondensat in einem Kondensatkreislauf geführt, wobei in dem Restwärmetauscher erwärmtes Kondensat zumindest teilweise dem Luftvorwärmer zugeführt wird, in dem Luftvorwärmer aus dem Kondensat ein Kondensatspray gebildet wird, das in unmittelbarem Kontakt mit der Verbrennungsluft steht und Wärme an dieselbe abgibt, dann das in dem Luftvorwärmer abgekühlte Kondensat zumindest teilweise dem Restwärmetauscher zugeführt wird und in dem Restwärmetauscher aus dem Kondensat ein Kondensatspray gebildet wird, das in unmittelbarem Kontakt mit dem Abgas steht und Wärme aus demselben aufnimmt.

Um einen besonders guten Wärmeübergang zu erzielen, ist es günstig, wenn das im Restwärmetauscher erzeugte Kondensatspray den Restwärmetauscher im Gegenstrom zu dem Abgas durchströmt.

Aus demselben Grunde ist es günstig, wenn das im Luftvorwärmer erzeugte Kondensatspray den Luftvorwärmer im Gegenstrom zu der Verbrennungsluft durchströmt.

Erfolgt der Wärmeübergang zwischen dem Kondensat und dem Abgas im Restwärmetauscher bzw. der Verbrennungsluft im Luftvorwärmer jeweils mittels eines Kondensatsprays, so kann erreicht werden, daß die netto im Restwärmetauscher gebildete Kondensatmenge größer ist als die im Luftvorwärmer netto verdampfte Kondensatmenge.

Durch Erzeugung eines monodispersen Kondensatsprays im Luftvorwärmer und im Restwärmetauscher wird die Kondensatbildung weiter gefördert, und Kondensatverluste durch Austrag von Kondensattropfen aus dem Restwärmetauscher oder aus dem Luftvorwärmer werden verringert oder ganz vermieden.

Dem Kondensatkreislauf durch den Restwärmetauscher und den Luftvorwärmer muß daher kein zusätzliches Wasser zum Ausgleich von Kondensatverlusten zugeführt werden, so daß auf eine Speisewasserzufuhr zu dem Kondensatkreislauf während des Betriebs der Feuerungsanlage verzichtet werden kann.

Der vorliegenden Erfindung liegt die weitere Aufgabe zugrunde, eine Vorrichtung der eingangs genannten Art zu schaffen, die eine wirksamere Verringerung der Stickoxidbildung bei der Verbrennung im Brenner der Feuerungsanlage ermöglicht.

Diese Aufgabe wird bei einer Vorrichtung mit den Merkmalen des Oberbegriffs von Anspruch 13 erfindungsgemäß dadurch gelöst, daß die Vorrichtung einen von dem Abgas der Feuerungsanlage durchströmten Restwärmetauscher umfaßt, in dem das Abgas kühlbar ist, und daß die Einrichtung zum Zumischen eines Teils des Abgases eine in Strömungsrichtung des Abgases hinter dem Restwärmetauscher von einer Abgasleitung abzweigende Abgas-Abzweigleitung umfaßt.

Vorteilhafte Ausgestaltungen der erfindungsgemäßen Vorrichtung sind Gegenstand der abhängigen Ansprüche 14 bis 24, deren Vorteile bereits vorstehend im Zusammenhang mit den bevorzugten Ausgestaltungen des erfindungsgemäßen Verfahrens gemäß den Ansprüchen 2 bis 12 erläutert worden sind.

Weitere Merkmale und Vorteile der Erfindung sind Gegenstand der nachfolgenden Beschreibung und zeichnerischen Darstellung von Ausführungsbeispielen.

In der Zeichnung zeigen:
- Fig. 1: eine schematische Gesamtdarstellung einer Heizungsanlage mit einer Vorrichtung zum Zuführen von Verbrennungsluft zu dem Brenner der Heizungsanlage, bei der der Verbrennungsluft nach deren Austritt aus einem Luftvorwärmer ein Teil eines Abgases des Brenners der Heizungsanlage zugemischt wird;
- Fig. 2: einen schematischen Längsschnitt durch den Luftvorwärmer der Heizungsanlage aus Fig. 1;
- Fig. 3: einen schematischen Längsschnitt durch einen Restwärmetauscher mit integriertem Kondensat-Heizwasser-Wärmetauscher der Heizungsanlage aus Fig. 1;
- Fig. 4: einen schematischen Längsschnitt durch eine Verbrennungsluftzufuhr der Heizungsanlage aus Fig. 1 an einer Stelle, an der der Verbrennungsluft ein Teil eines Abgases des Brenners der Heizungsanlage zugemischt wird;
- Fig. 5: einen schematischen Längsschnitt durch eine zweite Ausführungsform einer Vorrichtung zum Zuführen von Verbrennungsluft, bei der ein Luftvorwärmer mit einem Restwärmetauscher der Heizungsanlage in einem gemeinsamen Gehäuse zusammengefaßt ist; und
- Fig. 6: eine schematische Gesamtdarstellung einer Heizungsanlage, bei der der Verbrennungsluft vor deren Eintritt in den Luftvorwärmer ein Teil eines Abgases des Brenners der Heizungsanlage zugemischt wird.

Gleiche oder funktional äquivalente Elemente sind in allen Figuren mit denselben Bezugszeichen bezeichnet.

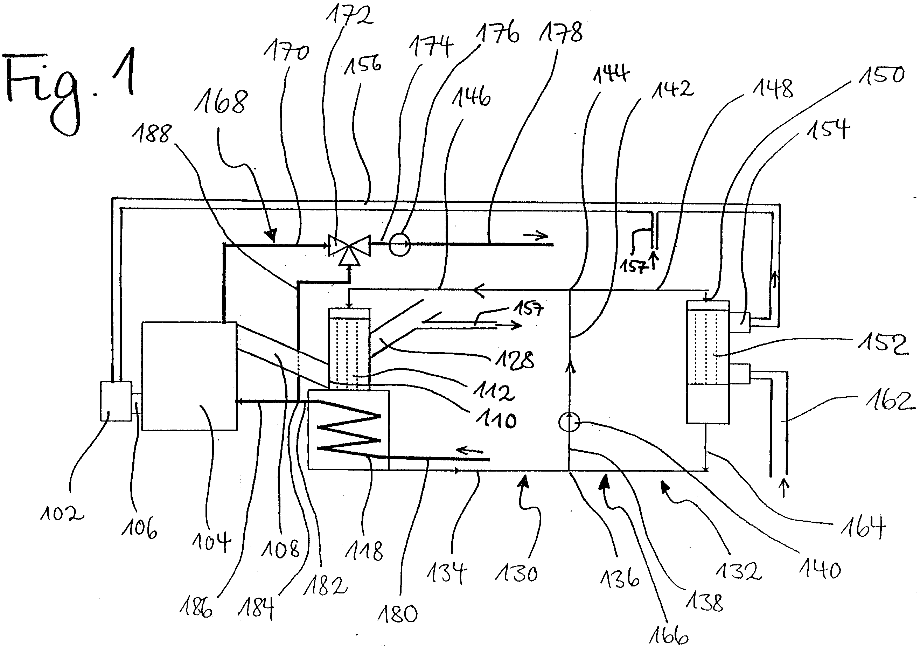

Eine in Fig. 1 schematisch dargestellte und als Ganzes mit 100 bezeichnete Heizungsanlage umfaßt als Feuerungsanlage einen Brenner 102, der mit einem Heizwasserkessel 104 zur Erhitzung von in letzterem enthaltenem Heizwasser verbunden ist.

Der Brenner 102 kann mit beliebigen flüssigen oder festen Brennstoffen, beispielsweise mit Heizöl, Erdgas oder Braunkohle, betrieben werden.

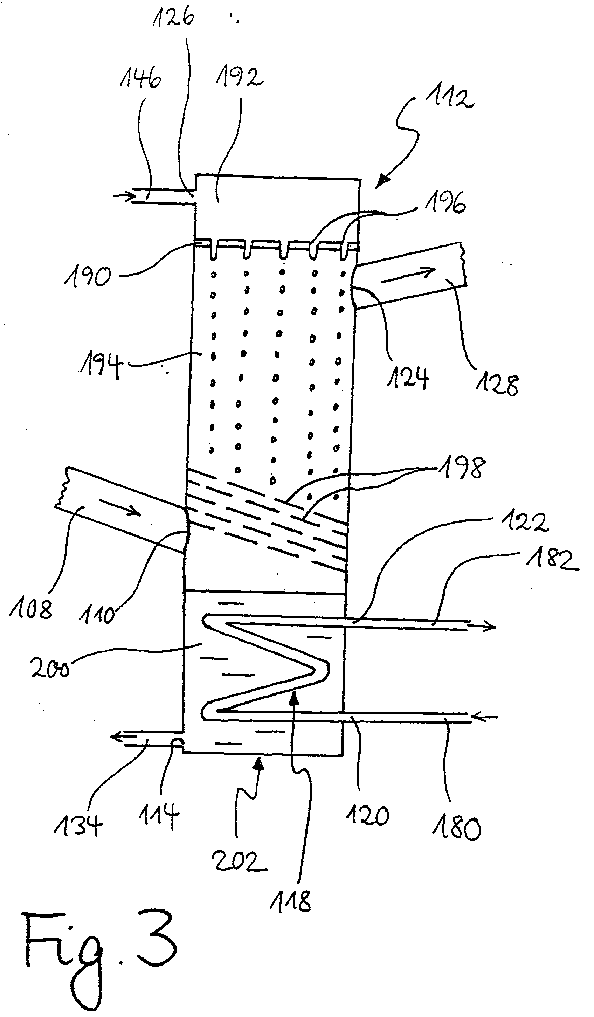

Eine Abgasleitung 106 führt das bei dem Verbrennungsprozeß im Brenner 102 entstehende heiße Abgas von dem Brenner 102 durch einen (nicht dargestellten) Feuerraum des Heizkessels 104 zu einem Abgaszuführrohr 108, das an seinem dem Heizkessel 104 abgewandten Ende an einem Abgaseintritt 110 in einen unteren Bereich eines Restwärmetauschers 112 mündet, der im einzelnen in Fig. 3 dargestellt ist und dessen Aufbau im folgenden detailliert beschrieben werden wird.

Der Restwärmetauscher 112 weist beispielsweise die Form eines aufrechtstehenden, an Ober- und Unterseite geschlossenen Hohlquaders oder Hohlzylinders auf und ist in seinem unteren Bereich außer mit dem Abgaseintritt 110 mit einem unterhalb desselben angeordneten Kondensataustritt 114 versehen. Im Innenraum des Restwärmetauschers 112 ist zwischen dem Kondensataustritt 114 und dem Abgaseintritt 110 eine Heizwasser-Wärmetauscherschlange 118 angeordnet.

Ein Heizwassereintritt 120 der Heizwasser-Wärmetauscherschlange 118 durchsetzt die Außenwand des Restwärmetauschers 112 oberhalb des Kondensataustritts 114, während ein am entgegengesetzten Ende der Heizwasser-Wärmetauscherschlange 118 angeordneter Heizwasseraustritt 122 die Außenwand des Restwärmetauschers 112 unterhalb des Abgaseintritts 110 durchsetzt.

Ferner weist der Restwärmetauscher 112 in seinem oberen Bereich einen Abgasaustritt 124 und einen oberhalb desselben angeordneten Kondensateintritt 126 auf.

Der Abgasaustritt 124 ist über ein Abgasabführrohr 128 mit einem (nicht dargestellten) Schornstein verbunden.

Der Restwärmetauscher 112 ist Bestandteil einer mit 130 bezeichneten ersten Schleife eines als Ganzes mit 132 bezeichneten Kondensatkreislaufs. Die Strömungsrichtung des Kondensats durch die erste Schleife 130 des Kondensatkreislaufs 132 ist in Fig. 1 mittels Pfeilspitzen angegeben.

Von dem Kondensataustritt 114 des Restwärmetauschers 112 führt eine Kondensat-Zwischenleitung 134 zu einem ersten Eingang einer Zusammenführung 136 des Kondensatkreislaufs 132.

Von einem Ausgang der Zusammenführung 136 führt eine weitere Kondensat-Zwischenleitung 138 zu einem saugseitigen Eingang einer Kondensatpumpe 140, die der Erzeugung einer kontinuierlichen Kondensatströmung durch den Kondensatkreislauf 132 dient.

Von einem druckseitigen Ausgang der Kondensatpumpe 140 führt eine Kondensat-Zwischenleitung 142 zu einem Eingang einer Verzweigung 144 des Kondensatkreislaufs 132.

Ein erster Ausgang der Verzweigung 144 ist über eine Kondensat-Zwischenleitung 146 mit dem Kondensateintritt 126 des Restwärmetauschers 112 verbunden.

Somit bilden der Restwärmetauscher 112, die Kondensat-Zwischenleitung 134, die Zusammenführung 136, die Kondensat-Zwischenleitung 138, die Kondensatpumpe 140, die Kondensat-Zwischenleitung 142, die Verzweigung 144 und die Kondensat-Zwischenleitung 146 zusammen die geschlossene erste Schleife 130 des Kondensatkreislaufs 132.

Von einem zweiten Ausgang der Verzweigung 144 führt eine Kondensat-Zwischenleitung 148 zu einem Kondensateintritt 150, der in einem oberen Bereich einer Vorrichtung zum Vorwärmen der dem Brenner 102 zugeführten Verbrennungsluft, welche im folgenden kurz als Luftvorwärmer 152 bezeichnet wird, angeordnet ist.

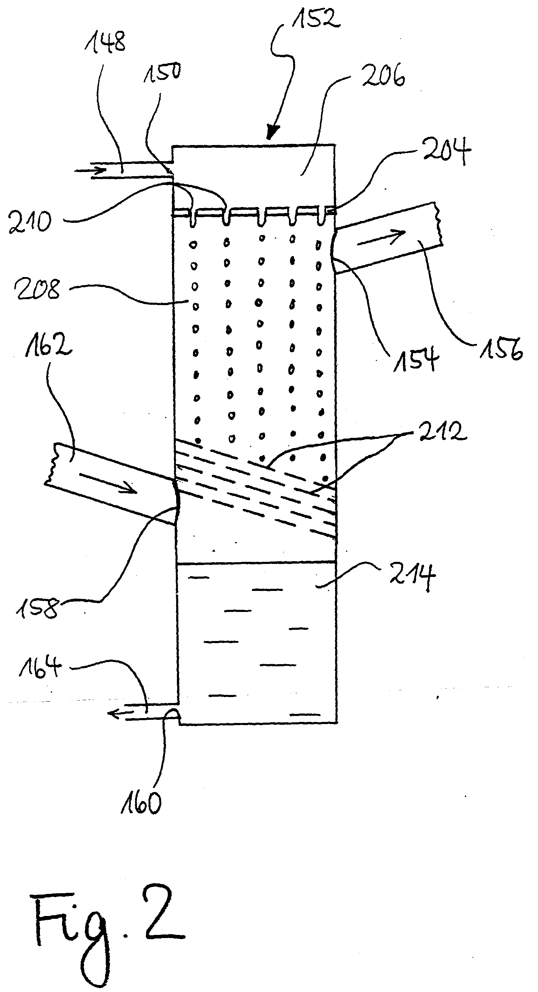

Der Luftvorwärmer 152 ist in Fig. 2 im einzelnen dargestellt und wird im folgenden detailliert beschrieben werden. Er weist ebenso wie der Restwärmetauscher 112 beispielsweise die Form eines aufrechtstehenden, an Ober- und Unterseite geschlossenen Hohlquaders oder Hohlzylinders auf und ist in seinem oberen Bereich außer mit dem Kondensateintritt 150 mit einem unterhalb desselben angeordneten Verbrennungsluftaustritt 154 versehen.

Der Verbrennungsluftaustritt 154 ist über eine Verbrennungsluft-Zwischenleitung 156 mit einem Verbrennungslufteintritt des Brenners 102 verbunden.

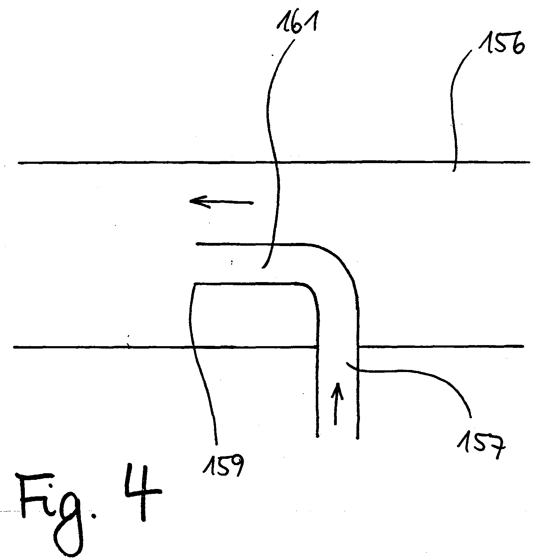

Eine Seitenwand der Verbrennungsluft-Zwischenleitung 156 wird von einer Abgas-Abzweigleitung 157 durchsetzt, die von dem Abgas-Abführrohr 128 abzweigt und an einer Mündungsöffnung 159 in den Innenraum der Verbrennungsluft-Zwischenleitung 156 mündet (siehe Fig. 4).

Die Mündungsöffnung 159 ist an einem abgewinkelten Endstück 161 der Abgas-Abzweigleitung 157 angeordnet, dessen Längsachse im wesentlichen parallel zu der Längsachse der Verbrennungsluft-Zwischenleitung 156 im Bereich der Mündungsöffnung 159 ausgerichtet ist.

Die jeweils engsten Querschnitte der Abgas-Abzweigleitung 157 und der Verbrennungsluft-Zwischenleitung 156 werden so gewählt, daß ein Anteil von 1 bis 5 Massenprozent, vorzugsweise von 1 bis 3 Massenprozent, des durch das Abgas-Abführrohr 128 strömenden Abgases aus demselben abgezweigt und der durch die Verbrennungsluft-Zwischenleitung 156 strömenden Verbrennungsluft zugemischt wird.

Da der Abgas-Massenstrom ungefähr dem Verbrennungsluft-Massenstrom entspricht, beträgt auch das Massenverhältnis des in die Verbrennungsluft-Zwischenleitung 156 einströmenden Abgases zu der durch die Verbrennungsluft-Zuführleitung 156 strömenden Verbrennungsluft ungefähr 1 bis ungefähr 5 Prozent, vorzugsweise ungefähr 1 bis ungefähr 3 Prozent.

Um die Dosierung der Abgaszumischung zu vereinfachen und von Umgebungseinflüssen weitgehend freizuhalten, wird die Mündungsöffnung 159 der Abgas-Abzweigleitung 157 an der engsten Stelle der Verbrennungsluftzufuhr in den Brenner 102 angeordnet. Da bei der vorstehend beschriebenen Anordnung die Strömungsgeschwindigkeiten und Dichten des Abgases in dem Endstück 161 der Abgas-Abzweigleitung 157 einerseits und der Verbrennungsluft in der Verbrennungsluft-Zwischenleitung 156 andererseits ungefähr gleich groß sind, entspricht das Massenstromverhältnis des zugemischten Abgases zu der Verbrennungsluft im wesentlichen dem Verhältnis der Querschnittsfläche der Mündungsöffnung 159 zu der Querschnittsfläche der Verbrennungsluft-Zwischenleitung 156 im Bereich der Mündungsöffnung 159.

Der Luftvorwärmer 152 ist in seinem unteren Bereich mit einem Verbrennungslufteintritt 158 und mit einem unterhalb desselben angeordneten Kondensataustritt 160 versehen.

An dem Verbrennungslufteintritt 158 mündet eine Verbrennungsluft-Zuführleitung 162 in den Innenraum des Luftvorwärmers 152.

Um die Abgas-Abzweigleitung 157 an der engsten Stelle der die Verbrennungsluft-Zuführleitung 162, den Luftvorwärmer 152 und die Verbrennungsluft-Zwischenleitung 156 umfassenden Verbrennungsluftzufuhr in die Verbrennungsluft-Zwischenleitung 156 münden lassen zu können, wird der Innenquerschnitt der Verbrennungsluft-Zuführleitung 162 größer gewählt als der Innenquerschnitt der Verbrennungsluft-Zwischenleitung 156.

Von dem Kondensataustritt 160 des Luftvorwärmers 152 führt eine Kondensat-Zwischenleitung 164 zu einem zweiten Eingang der Zusammenführung 136 des Kondensatkreislaufs 132.

Somit bilden der Luftvorwärmer 152, die Kondensat-Zwischenleitung 164, die Zusammenführung 136, die Kondensat-Zwischenleitung 138, die Kondensatpumpe 140, die Kondensat-Zwischenleitung 142, die Verzweigung 144 und die Kondensat-Zwischenleitung 148 zusammen eine geschlossene zweite Schleife 166 des Kondensatkreislaufs 132.

Außer den genannten und zeichnerisch dargestellten Elementen kann der Kondensatkreislauf 132 insbesondere noch die folgenden weiteren Elemente umfassen: einen Neutralisator, der der Neutralisierung saurer Kondensatkomponenten dient und zu diesem Zweck beispielsweise mit Hydrolit gefüllt ist; ein Kondensatfilter; einen Luftinjektor, der der Oxidation von in dem Kondensat gelösten Sulfit-Ionen zu ungiftigen Sulfat-Ionen mittels Luft dient, welche dem Luftinjektor über eine an denselben angeschlossene Luftzuführleitung zugeführt wird; einen Durchflußmesser, der der Bestimmung des Kondensatflusses im Kondensatkreislauf 132 dient; und/oder einen Druckmesser, der der Bestimmung des Druckes des durchströmenden Kondensates dient.

Die vorstehend genannten Elemente werden in dem Kondensatkreislauf 132 vorgesehen, wenn dies zur Einstellung oder zur Überwachung der Betriebsbedingungen wünschenswert oder erforderlich ist. Vorzugsweise werden die genannten weiteren Elemente in der ersten Schleife 130 des Kondensatkreislaufs 132 angeordnet.

Die erste Schleife 130 und die zweite Schleife 166 des Kondensatkreislaufs 132 weisen einen gemeinsamen, zwischen der Zusammenführung 136 und der Verzweigung 144 des Kondensatkreislaufs 132 liegenden Abschnitt auf, der die Kondensatpumpe 140 umfaßt, so daß nur eine Kondensatpumpe 140 benötigt wird, um eine kontinuierliche Kondensatströmung durch beide Schleifen 130, 166 des Kondensatkreislaufs 132 anzutreiben.

Wie aus Fig. 1 zu ersehen ist, umfaßt die Heizungsanlage 100 außer dem Kondensatkreislauf 132 einen Heizwasserkreislauf 168, zu dem der von dem Brenner 102 beheizte Heizkessel 104 zählt.

Von einem Heizwasserausgang des Heizkessels 104 führt eine Heizwasser-Zwischenleitung 170 zu einem ersten Eingang eines magnetisch betätigten Dreiwegeventils 172, dessen Ausgang wahlweise mit dem ersten Eingang oder einem zweiten Eingang verbunden werden kann.

Von dem Ausgang des Dreiwegeventils 172 führt eine Heizwasser-Zwischenleitung 174 zu einem saugseitigen Eingang einer Heizwasserpumpe 176.

Ein druckseitiger Ausgang der Heizwasserpumpe 176 ist über eine Heizwasser-Vorlaufleitung 178 mit einer (aus Gründen der Übersichtlichkeit nicht dargestellten) Heizkörperanordnung verbunden, die beispielsweise der Wärmeabgabe an die Luft von Innenräumen dient.

Über eine (in Fig. 1 dargestellte) Heizwasser-Rücklaufleitung 180 ist die Heizkörperanordnung mit dem Heizwassereintritt 120 der Heizwasser-Wärmetauscherschlange 118 des Restwärmetauschers 112 verbunden.

Von dem Heizwasseraustritt 122 des Restwärmetauschers 112 führt eine Heizwasser-Zwischenleitung 182 zu einem Eingang einer Verzweigung 184.

Eine erster Ausgang der Verzweigung 184 ist über eine Heizwasser-Zwischenleitung 186 mit einem Heizwassereingang des Heizkessels 104 verbunden.

Von einem zweiten Ausgang der Verzweigung 184 führt eine Umgehungsleitung 188 zu dem zweiten Eingang des Dreiwegeventils 172.

Der in der ersten Schleife 130 des Kondensatkreislaufs 132 angeordnete Restwärmetauscher 112 ist als Monodispers-Kondensatspray-Wärmetauscher ausgebildet. Ein solcher Monodispers-Kondensatspray-Wärmetauscher ist in der deutschen Offenlegungsschrift 195 43 452 beschrieben, auf die im Hinblick auf den Aufbau und die Funktion des Monodispers-Kondensatspray-Wärmetauschers Bezug genommen wird und deren Inhalt hiermit ausdrücklich zum Bestandteil dieser Beschreibung gemacht wird.

Der in Fig. 3 dargestellte Restwärmetauscher 112 umfaßt eine horizontal angeordnete Düsenplatte 190, die den Innenraum des Restwärmetauschers 112 in eine oberhalb der Düsenplatte 190 angeordnete Düsenvorkammer 192 und einen unterhalb der Düsenplatte 190 angeordneten Wärmetauscherraum 194 teilt.

Die Düsenplatte 190 wird in vertikaler Richtung von mehreren Düsenbohrungen 196 durchsetzt. Die Düsenbohrungen 196 sind so ausgebildet, daß aus den Düsenbohrungen 196 in den Wärmetauscherraum 194 austretende Kondensatstrahlen in ein monodisperses Kondensatspray zerfallen.

Ein monodisperses Kondensatspray wird dabei mit Hilfe des Tropfengrößenspektrums wie folgt definiert:

Es sei d_{0,05} der Tropfendurchmesser, für den gilt, daß alle Tropfen des Kondensatsprays, deren Durchmesser kleiner ist als dieser Durchmesser, zusammen 5 % des Flüssigkeitsvolumens des Sprays beinhalten.

Ferner sei d_{0.95} der Tropfendurchmesser, für den gilt, daß alle Tropfen des Kondensatsprays, deren Durchmesser größer ist als dieser Durchmesser, zusammen 5 % des Flüssigkeitsvolumens des Sprays beinhalten.

Dann soll ein Kondensatspray als monodispers gelten, wenn das Verhältnis des Durchmessers d_{0,95} zu dem Durchmesser d_{0,05} kleiner ist als ungefähr 1,2.

Ein monodisperses Kondensatspray weist also eine sehr schmale Tropfengrößenverteilung auf. Verschiedene Möglichkeiten, die Düsenbohrungen 196 so auszugestalten, daß die aus diesen Düsenbohrungen 196 austretenden Kondensatstrahlen in ein monodisperses Kondensatspray zerfallen, sind in der deutschen Offenlegungsschrift 195 43 452 angegeben.

Wie in Fig. 3 dargestellt ist, mündet die Kondensat-Zwischenleitung 146 oberhalb der Düsenplatte 190 durch die Seitenwand des Restwärmetauschers 112 an dem Kondensateintritt 126 in die Düsenvorkammer 192.

Auf der Höhe des Abgaseintritts 110 sind in dem Wärmetauscherraum 194 des Restwärmetauschers 112 mehrere, beispielsweise fünf, übereinander angeordnete, zueinander parallel ausgerichtete Lochbleche 198 vorgesehen.

Dabei sind die Lochbleche 198 so gegen die Horizontale geneigt, daß sie zu einem dem Abgaseintritt 110 zugewandten Rand hin ansteigen.

Kondensattropfen, die auf eines der Lochbleche 198 fallen, zerfallen in kleinere Tröpfchen und Ligamente, die eine große spezifische Oberfläche aufweisen und leichter verdampfen.

Durch die Lochblechanordnung wird somit aus dem mittels der Düsenplatte 190 erzeugten monodispersen Kondensatspray ein Verdampfungs-Kondensatspray aus kleineren Tröpfchen erzeugt, das durch das heiße Abgas, das in den Wärmetauscherraum 194 des Restwärmetauschers 112 einströmt, im wesentlichen vollständig verdampft wird.

Da die Oberseiten der Lochbleche 198 dem Abgaseintritt 110 abgewandt sind, gelangt nur ein geringer Teil des erzeugten Verdampfungs-Kondensatsprays durch den Abgaseintritt 110 in das Abgaszuführrohr 108. Eine Korrosion des Abgaszuführrohrs 108 durch das Kondensat und die Bildung von Ablagerungen aus dem Kondensat werden daher weitgehend vermieden, ohne daß hierzu ein Tropfenabscheider am Abgaseintritt 110 erforderlich wäre.

Der untere Bereich des Wärmetauscherraums 194 des Restwärmetauschers 112 ist mit durch die Lochblechanordnung hindurch gelangtem Kondensat gefüllt, das einen Kondensatsumpf 200 bildet.

In diesen Kondensatsumpf 200 taucht die Heizwasser-Wärmetauscherschlange 118 ein, so daß der Kondensatsumpf 200 und die Heizwasser-Wärmetauscherschlange 118 zusammen einen Kondensat-Heizwasser-Wärmetauscher 202 bilden.

In den Kondensatsumpf 200 mündet nahe des Bodens des Wärmetauscherraums 194 die Kondensat-Zwischenleitung 134 durch die Seitenwand des Restwärmetauschers 112 an dem Kondensataustritt 114.

Auch der in der zweiten Schleife 166 des Kondensatkreislaufs 132 angeordnete, in Fig. 2 dargestellte Luftvorwärmer 152 ist als Monodispers-Kondensatspray-Wärmetauscher ausgebildet, dessen Aufbau (bis auf das Fehlen einer Heizwasser-Wärmetauscherschlange in dem Luftvorwärmer 152) im wesentlichen dem Aufbau des Restwärmetauschers 112 entspricht.

Insbesondere umfaßt der Luftvorwärmer 152 eine horizontal angeordnete Düsenplatte 204, die den Innenraum des Luftvorwärmers 152 in eine oberhalb der Düsenplatte 204 angeordnete Düsenvorkammer 206 und einen unterhalb der Düsenplatte 204 angeordneten Luftvorwärmraum 208 teilt.

Die Düsenplatte 204 wird in vertikaler Richtung von mehreren Düsenbohrungen 210 durchsetzt.

Die Düsenbohrungen 210 in der Düsenplatte 204 des Luftvorwärmers 152 sind ebenso wie die Düsenbohrungen 196 in der Düsenplatte 190 des Restwärmetauschers 112 so ausgebildet, daß aus den Düsenbohrungen 210 in den Luftvorwärmraum 208 austretende Kondensatstrahlen in ein monodisperses Kondensatspray zerfallen.

Auf der Höhe des Verbrennungslufteintritts 158 sind in dem Luftvorwärmraum 208 mehrere, beispielsweise fünf, übereinander angeordnete, zueinander parallel ausgerichtete Lochbleche 212 vorgesehen.

Die Lochbleche 212 sind so gegen die Horizontale geneigt, daß sie zu einem dem Verbrennungslufteintritt 158 zugewandten Rand hin ansteigen.

Jedes der Lochbleche 212 überdeckt einzeln den gesamten Querschnitt des Luftvorwärmraums 208. Jedes der Lochbleche, die beispielsweise aus Edelstahl gefertigt sein können, weist einen Durchlaß von ungefähr 55 bis 75 % auf. Die Verbrennungsluft, die aus der Verbrennungsluft-Zuführleitung 162 durch den Verbrennungslufteintritt 158 in den Luftvorwärmraum 208 eintritt, kann durch die Löcher in den Lochblechen 212 nach oben strömen.

Kondensattropfen, die auf eines der Lochbleche 212 fallen, zerfallen in kleinere Tröpfchen und Ligamente, die eine große spezifische Oberfläche aufweisen und Wärme an die eintretende Verbrennungsluft abgeben. Kondensattropfen, die durch die Öffnungen eines der Lochbleche 212 fallen, erreichen das jeweils darunterliegende Lochblech 212.

Werden die Löcher in einem Lochblech 212 jeweils versetzt zu den Löchern in dem darüber- und in dem darunterliegenden Lochblech 212 angeordnet, so läßt sich erreichen, daß jeder durch den Luftvorwärmraum 208 fallende Kondensattropfen mindestens einmal auf ein Lochblech 212 auftrifft und in kleinere Tröpfchen zerfällt, bevor er einen unter den Lochblechen 212 angeordneten Kondensatsumpf 214 erreicht. Dadurch wird die Wärmeübertragung an die Verbrennungsluft verbessert.

Da die Oberseiten der Lochbleche 212 dem Verbrennungslufteintritt 158 abgewandt sind, gelangt nur ein geringer Teil der durch Zerstäubung an den Lochblechen 212 erzeugten Tröpfchen durch den Verbrennungslufteintritt 158 in die Verbrennungsluft-Zuführleitung 162. Eine Korrosion der Verbrennungsluft-Zuführleitung 162 durch das Kondensat und die Bildung von Ablagerungen aus dem Kondensat werden daher weitgehend vermieden, ohne daß hierzu ein Tropfenabscheider am Verbrennungslufteintritt 158 erforderlich wäre.

In den Kondensatsumpf 214 mündet nahe des Bodens des Luftvorwärmraums 208 die Kondensat-Zwischenleitung 164 durch die Seitenwand des Luftvorwärmers 152 an dem Kondensataustritt 160.

Die vorstehend beschriebene Heizungsanlage 100 funktioniert wie folgt:

Während der Betriebsphasen des Brenners 102 entsteht durch Verbrennung des Brennstoffes (Öl, Kohle, Gas) mittels durch die Verbrennungsluft-Zwischenleitung 156 dem Brenner 102 zugeführter Verbrennungsluft im Brenner 102 ein Abgas, das durch die Abgasleitung 106, den Heizkessel 104 und das Abgaszuführrohr 108 zum Restwärmetauscher 112 strömt.

Zu Beginn jeder Betriebsphase des Brenners 102 wird auch die Kondensatpumpe 140 im Kondensatkreislauf 132 in Betrieb genommen. Infolgedessen strömt das Kondensat aus dem Kondensatsumpf 200 des Restwärmetauschers 112 und aus dem Kondensatsumpf 214 des Luftvorwärmers 152 durch die Kondensat-Zwischenleitung 134 bzw. durch die Kondensat-Zwischenleitung 164 zur Zusammenführung 136 und von dort durch die Kondensat-Zwischenleitung 138, die Kondensatpumpe 140 und die Kondensat-Zwischenleitung 142 zu der Verzweigung 144 des Kondensatkreislaufs 132.

Von der Verzweigung 144 strömt ein Teil des Kondensats durch die Kondensat-Zwischenleitung 146 und den Kondensateintritt 126 in die Düsenvorkammer 192 des Restwärmetauschers 112.

Von dort wird das Kondensat unter einem geringen Überdruck von beispielsweise 0,1 bar durch die Düsenbohrungen 196 in der Düsenplatte 190 in den Wärmetauscherraum 194 gepreßt.

Wie in Fig. 3 dargestellt, tritt aus jeder der Düsenbohrungen 190 ein frei durch den Wärmetauscherraum 194 fallender Kondensatstrahl aus, der nach Durchfallen einer Zerfallslänge in die Tropfen eines Kondensatsprays zerfällt.

Der Zerfall eines Kondensatstrahls mit rundem Querschnitt erfolgt nach einem der folgenden Zerfallsmechanismen: Rayleigh-Zerfall, Membran-Zerfall oder Fiber-Zerfall.

Die Strömungsgeschwindigkeit des Kondensats durch die Düsenbohrungen 196 wird mittels der Kondensatpumpe 140 so eingestellt, daß der Zerfall der Kondensatstrahlen in dem Wärmetauscherraum 194 durch Rayleigh-Zerfall erfolgt, wobei aus jedem Kondensatstrahl eine monodisperse Tropfenkette entsteht, deren Tropfen jeweils einen Durchmesser aufweisen, der ungefähr das Doppelte des ursprünglichen Strahldurchmessers beträgt. Der Rayleigh-Zerfall führt somit zur Bildung eines monodispersen Kondensatsprays.

Für die Einzelheiten zu dem Zerfallsmechanismus des Kondensatstrahls und für die Betriebsbedingungen, die einzustellen sind, um einen Zerfall des Kondensatstrahls in ein monodisperses Kondensatspray zu erreichen, insbesondere die Strömungsgeschwindigkeit des Kondensats durch die Düsenbohrungen 190, wird auf die deutsche Offenlegungsschrift 195 43 452 verwiesen.

Die Tropfen des monodispersen Kondensatsprays, die nach Durchfallen des oberen Bereichs des Wärmetauscherraums 194 auf die Lochbleche 198 auftreffen, zerfallen in kleinere Tröpfchen und Ligamente, so daß im Bereich des Abgaseintritts 110 ein Verdampfungs-Kondensatspray gebildet wird.

Dieses Verdampfungs-Kondensatspray wird von dem durch den Abgaseintritt 110 in den Wärmetauscherraum 194 eintretenden heißen Abgas im wesentlichen vollständig verdampft, wobei das heiße Abgas rasch abgekühlt wird. Ferner verdampft das in den Wärmetauscherraum 194 eintretende Abgas auch zumindest einen Teil der Tropfen des monodispersen Kondensatsprays. Dabei wandelt sich die fühlbare Abgaswärme in latente Wärme um.

Der durch Verdampfung des Verdampfungs-Kondensatsprays und durch partielle Verdampfung des monodispersen Kondensatsprays gebildete Wasserdampf strömt zusammen mit dem abgekühlten Abgas und dem darin bereits enthaltenen Wasserdampf gegen die Fallrichtung des Kondensatsprays im Wärmetauscherraum 194 nach oben, wobei sich das Abgas weiter abkühlt, so daß im oberen, der Düsenplatte 190 benachbarten Bereich des Wärmetauscherraums 194 der im Abgas mitgeführte Wasserdampf an den Tropfen des monodispersen Kondensatsprays kondensiert, wobei der zirkulierende Kondensatmassenstrom die im Dampf enthaltene latente Wärme aufnimmt.

Die Menge des im oberen Bereich des Wärmetauscherraums 194 kondensierenden Wasserdampfes ist größer als die Menge des im unteren Bereich des Wärmetauscherraums 194 verdampften Kondensats, so daß im Ergebnis der mit dem Abgas in den Restwärmetauscher 112 gelangte Wasserdampf zumindest teilweise kondensiert und dabei latente Wärme an den Kondensatmassenstrom im Kondensatkreislauf 132 abgibt.

Da das Kondensat demnach fühlbare und latente Wärme aus dem Abgasstrom aufnimmt, wirkt es als Kühlmedium für das Abgas des Brenners 102.

Das Abgas wird im Restwärmetauscher 112 nicht nur abgekühlt und getrocknet, sondern auch gereinigt, da im Abgas mitgeführte Schadstoffe im Kondensatstrom gelöst werden. Insbesondere wird bei Verwendung schwefelhaltiger Brennstoffe im Brenner 102 entstehendes SO₂ aus dem Abgas ausgewaschen.

Das im Restwärmetauscher 112 abgekühlte Abgas gelangt durch den Abgasaustritt 124 und das Abgasabführrohr 128 zu dem (nicht dargestellten) Schornstein, durch den es in die Atmosphäre entweichen kann.

Ein Anteil von 2 bis 4 Massenprozent des im Restwärmetauscher 112 abgekühlten Abgases zweigt in die Abgas-Abzweigleitung 157 ab und gelangt in die Verbrennungsluft-Zwischenleitung 156, wo er sich mit der zugeführten, im Luftvorwärmer 152 erwärmten Verbrennungsluft vermischt. Durch die Zumischung von Abgas wird der Massenanteil inerter Bestandteile in der Verbrennungsluft erhöht, was zu einer Erniedrigung der Flammentemperatur des Brenners 102 und damit zu einer Verringerung der Stickoxidbildung führt.

Die nicht verdampften Tropfen des Kondensatsprays gelangen nach Durchfallen des Wärmetauscherraums 194 in den Kondensatsumpf 200, der einen Teil des Kondensat-Heizwasser-Wärmetauschers 202 bildet. In dem Kondensat-Heizwasser-Wärmetauscher 202 gibt das Kondensat einen Teil der aus dem Abgas aufgenommenen Wärme an Heizwasser ab, das durch die Heizwasser-Wärmetauscherschlange 118 strömt. Die Strömung des Heizwassers wird durch die Heizwasserpumpe 176 erzeugt, die während der Betriebsphasen des Brenners 102 einen Heizwasserumlauf durch den Kondensat-Heizwasser-Wärmetauscher 202, den Heizkessel 104, die Heizwasser-Vorlaufleitung 178, die (nicht dargestellte Heizkörperanordnung) und die Heizwasser-Rücklaufleitung 180 aufrechterhält. Dazu wird das Dreiwegeventil 172 während der Betriebsphasen des Brenners 102 in eine Stellung gebracht, in der die vom Heizkessel 104 her kommende Heizwasser-Zwischenleitung 170 mit der zur Heizwasserpumpe 176 hin führenden Heizwasser-Zwischenleitung 174 verbunden ist, so daß das Heizwasser durch den Heizkessel 104 strömt, um dort Wärme aus dem Abgas des Brenners 102 aufzunehmen.

Während der Betriebspausen des Brenners 102 kann das Dreiwegeventil 172 in eine Stellung gebracht werden, in der die Umgehungsleitung 188 mit der zu der Heizwasserpumpe 176 führenden Heizwasser-Zwischenleitung 174 verbunden ist, so daß in diesem Fall das Heizwasser unter Umgehung des Heizkessels 104 von der Verzweigung 184 direkt zum Dreiwegeventil 172 strömt. In diesem Betriebszustand nimmt das Heizwasser im Heizwasserkreislauf 168 lediglich von dem Kondensat in dem Kondensat-Heizwasser-Wärmetauscher 202 Wärme auf, so daß während der Betriebspausen des Brenners 102 die in dem umlaufenden Kondensat enthaltene Restwärme genutzt werden kann. Zu diesem Zweck wird die Strömung durch den Kondensatkreislauf 132 mittels der Kondensatpumpe 140 auch nach Abschalten des Brenners 102 noch eine gewisse Zeit lang aufrechterhalten, damit die in dem Kondensat des Kondensatkreislaufs 132 enthaltene Restwärme möglichst vollständig an das Heizwasser abgegeben wird.

Neben dem Kondensat-Heizwasser-Wärmetauscher 202 bildet der Luftvorwärmer 152 eine weitere Wärmesenke in dem Kondensatkreislauf 132.

Ein Teil des im Restwärmetauscher 112 von dem Abgas erwärmten Kondensats strömt nämlich von der Verzweigung 144 durch die Kondensat-Zwischenleitung 148 und den Kondensateintritt 150 in die Düsenvorkammer 206 des Luftvorwärmers 152, von wo das Kondensat unter einem geringen Überdruck von beispielsweise 0,1 bar durch die Düsenbohrungen 210 in der Düsenplatte 204 in den Luftvorwärmraum 208 gepreßt wird.

Wie in Fig. 2 dargestellt, tritt aus jeder der Düsenbohrungen 210 ein frei durch den Luftvorwärmraum 208 fallender Kondensatstrahl aus, der nach Durchfallen einer Zerfallslänge in die Tropfen eines Kondensatsprays zerfällt.

Wie auch beim Restwärmetauscher 112 werden die Betriebsbedingungen, insbesondere die Strömungsgeschwindigkeit des Kondensats durch die Düsenbohrungen 210, dabei so gewählt, daß die Kondensatstrahlen durch Rayleigh-Zerfall in ein monodisperses Kondensatspray zerfallen.

Die Tropfen des monodispersen Kondensatsprays durchfallen den Luftvorwärmraum 208 und treffen jeweils auf eines der Lochbleche 212, wobei sie in kleinere Tröpfchen und Ligamente zerfallen, so daß ein Verdampfungs-Kondensatspray gebildet wird.

Durch die Verbrennungsluft-Zuführleitung 162 und den Verbrennungslufteintritt 158 in den Luftvorwärmraum 208 des Luftvorwärmers 152 gelangende frische, kalte Verbrennungsluft, der über die Abgas-Abzweigleitung 163 ein Teil des abgekühlten Abgases aus dem Abgasabführrohr 128 zugemischt ist, kommt in unmittelbaren Kontakt mit den Tröpfchen des Verdampfungs-Kondensatsprays und den Tropfen des monodispersen Kondensatsprays und nimmt dabei Wärme aus dem Kondensat auf. Ferner werden die Tröpfchen des Verdampfungs-Kondensatsprays und des monodispersen Kondensatsprays zumindest teilweise verdampft, so daß die Verbrennungsluft nicht nur fühlbare, sondern auch latente Wärme aufnimmt und der Wasserdampfgehalt der Verbrennungsluft sich erhöht, die Verbrennungsluft also befeuchtet wird.

Da das Kondensat demnach fühlbare und latente Wärme in dem Luftvorwärmer 152 an die Verbrennungsluft abgibt, wirkt es als Wärmetauschflüssigkeit für die Verbrennungsluft.

Aufgrund der Verdampfung von Kondensat im Luftvorwärmraum 208 des Luftvorwärmers 152 ist die in dem Kondensatsumpf 214 am Boden des Luftvorwärmraums 208 eintreffende Kondensatmenge geringfügig kleiner als die durch die Düsenplatte 204 in den Luftvorwärmraum 208 eintretende Kondensatmenge.

Die in dem Luftvorwärmraum 208 des Luftvorwärmers 152 erwärmte und befeuchtete Verbrennungsluft gelangt durch den Verbrennungsluftaustritt 154 und die Verbrennungsluft-Zwischenleitung 156 in den Brenner 102, wo sie zur Verbrennung des Brennstoffes verwendet wird.

Durch die Luftvorwärmung wird der feuerungstechnische Wirkungsgrad der Heizungsanlage 100 erhöht. Durch die Luftbefeuchtung wird die Flammentemperatur des Brenners 102 und damit die Stickoxidbildung bei der Verbrennung reduziert.

Bei einer Variante des vorstehend beschriebenen ersten Ausführungsbeispiels einer Heizungsanlage 100 kann vorgesehen sein, daß der Kondensataustritt 160 des Luftvorwärmers 152 nicht über eine Kondensat-Zwischenleitung 164 mit der Zusammenführung 136 des Kondensatkreislaufs 132, sondern direkt mit einem weiteren Kondensateintritt des Kondensat-Heizwasser-Wärmetauschers 202 verbunden ist. Bei dieser Variante entfällt die Zusammenführung 136 des Kondensatkreislaufs 132.

Vielmehr werden das Kondensat, das den Restwärmetauscher 112 durchlaufen hat, und das Kondensat, das den Luftvorwärmer 152 durchlaufen hat, im Kondensat-Heizwasser-Wärmetauscher 202 zusammengeführt und miteinander vermischt.

Im übrigen stimmt diese Variante des ersten Ausführungsbeispiels der Heizungsanlage 100 hinsichtlich Aufbau und Funktion mit der vorstehend beschriebenen Heizungsanlage 100 überein.

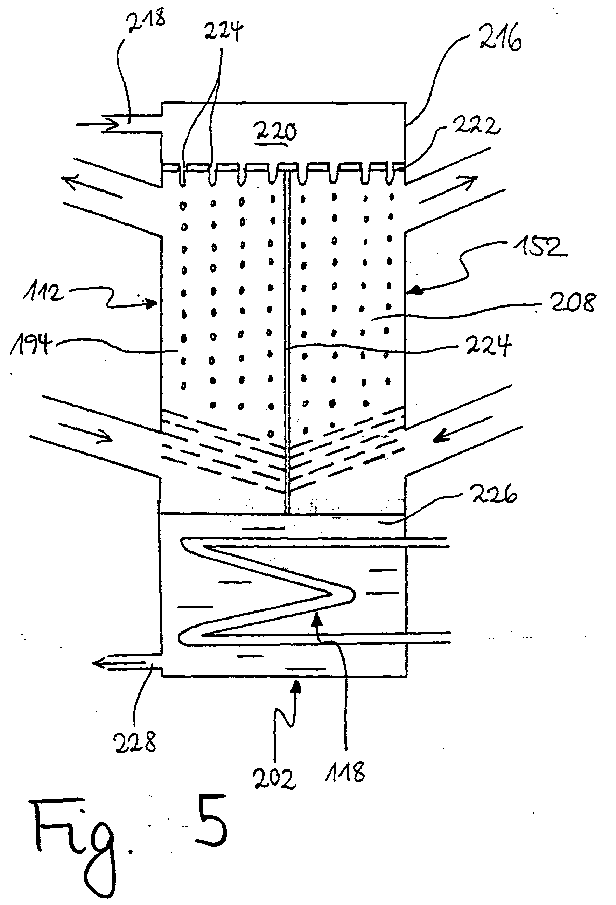

Ein zweites, in Fig. 5 dargestelltes Ausführungsbeispiel einer Heizungsanlage 100 unterscheidet sich von dem vorstehend beschriebenen ersten Ausführungsbeispiel hinsichtlich der Ausgestaltung des Kondensatkreislaufs 132.

Wie aus Fig. 5 zu ersehen ist, sind der Restwärmetauscher 112 und der Luftvorwärmer 152 des zweiten Ausführungsbeispiels nicht räumlich voneinander getrennt, sondern in einem gemeinsamen Gehäuse 216 zusammengefaßt.

In einem oberen Bereich des Gehäuses 216 mündet eine Kondensat-Zuführleitung 218 durch eine Seitenwand des Gehäuses 216 in eine gemeinsame Düsenvorkammer 220 des Restwärmetauschers 112 und des Luftvorwärmers 152, die durch eine Düsenplatte 222 mit Düsenbohrungen 224 von einem Wärmetauscherraum 194 und von einem Luftvorwärmraum 208 abgetrennt ist.

Der Wärmetauscherraum 194 und der Luftvorwärmraum 208 sind ihrerseits durch eine Trennwand 224 voneinander getrennt.

Die Trennwand 224 erstreckt sich von der Unterseite der Düsenplatte 222 nach unten bis zum oberen Rand eines gemeinsamen Kondensatsumpfes 226 des Restwärmetauschers 112 und des Luftvorwärmers 152, in den das durch den Wärmetauscherraum 194 bzw. durch den Luftvorwärmraum 208 fallende Kondensat gelangt und der zusammen mit einer darin angeordneten Heizwasser-Wärmetauscherschlange 118 einen Hondensat-Heizwasser-Wärmetauscher 202 bildet.

Über eine Kondensat-Abführleitung 228 ist der Kondensatsumpf 226 mit einem saugseitigen Eingang einer (in Fig. 5 nicht dargestellten) Kondensatpumpe verbunden, deren druckseitiger Ausgang über die Kondensat-Zuführleitung 218 mit der Düsenvorkammer 220 in Verbindung steht.

Der Kondensatkreislauf des zweiten Ausführungsbeispiels umfaßt demnach die Kondensat-Zuführleitung 218, den Restwärmetauscher 112 und den Luftvorwärmer 152, die in einem gemeinsamen Gehäuse 216 angeordnet sind, den Kondensat-Heizwasser-Wärmetauscher 202, die Kondensat-Abführleitung 228 und die Kondensatpumpe.

Durch die Zusammenfassung des Restwärmetauschers 112 und des Luftvorwärmers 152 in einem gemeinsamen Gehäuse 216 wird eine besonders kompakte und kostensparende Bauweise der Heizungsanlage 100 ermöglicht.

Ferner kann durch die Trennwand 224 hindurch ein zusätzlicher Wärmeaustausch zwischen dem den Wärmetauscherraum 194 durchströmenden heißen Abgas und der den Luftvorwärmraum 208 durchströmenden kalten Verbrennungsluft erfolgen.

Im übrigen stimmt das zweite Ausführungsbeispiel einer Heizungsanlage 100 hinsichtlich Aufbau und Funktion mit dem vorstehend beschriebenen ersten Ausführungsbeispiel überein.

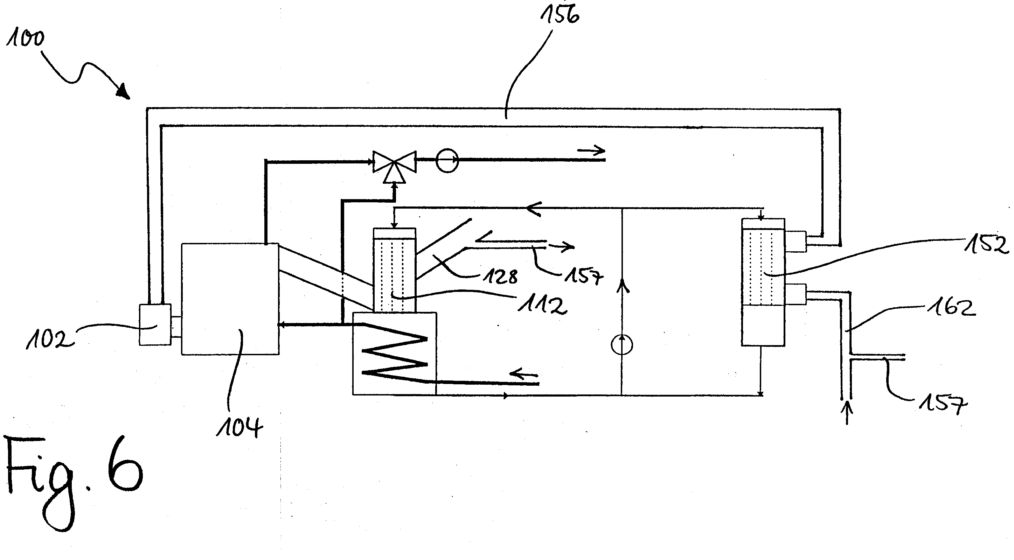

Ein drittes, in Fig. 6 dargestelltes Ausführungsbeispiel einer Heizungsanlage 100 unterscheidet sich von dem vorstehend beschriebenen ersten Ausführungsbeispiel hinsichtlich der Anordnung der Abgas-Abzweigleitung 157.

Wie aus Fig. 6 zu ersehen ist, mündet die von der Abgas-Abführleitung 128 abzweigende Abgas-Abzweigleitung 157 nicht, wie bei dem ersten Ausführungsbeispiel, in die Verbrennungsluft-Zwischenleitung 156, sondern in die Verbrennungsluft-Zuführleitung 162.

Bei diesem Ausführungsbeispiel wird ein Teil des Abgases der Feuerungsanlage also nicht der bereits im Luftvorwärmer 152 erwärmten Verbrennungsluft, sondern der durch die Verbrennungsluft-Zuführleitung 162 strömenden kalten, frischen Verbrennungsluft zugemischt. Dadurch wird erreicht, daß das zugemischte Abgas zweifach gereinigt wird, nämlich zum ersten Mal in dem Restwärmetauscher 112 und zum zweiten Mal in dem Luftvorwärmer 152. Dadurch können mittels des den Restwärmetauscher 112 und den Luftvorwärmer 152 durchströmenden Kondensats im zugemischten Abgas enthaltene Schadstoffe, beispielsweise SO₂, im wesentlichen vollständig ausgewaschen werden.

Der Bereich der Einmündung der Abgas-Abzweigleitung 157 in die Verbrennungsluft-Zuführleitung 162 kann so ausgebildet sein, wie bereits im Zusammenhang mit Fig. 4 für die Einmündung der Abgas-Abzweigleitung 157 in die Verbrennungsluft-Zwischenleitung 156 bei dem ersten Ausführungsbeispiel der Heizungsanlage 100 beschrieben.

Wie bereits erwähnt, ist es für eine von Umgebungseinflüssen im wesentlichen unabhängige Dosierung des zugemischten Abgases zu der Verbrennungsluft von Vorteil, wenn das Abgas der Verbrennungsluft an der engsten Stelle der Verbrennungsluftzufuhr zugemischt wird. Die Verbrennungsluftzufuhr umfaßt dabei neben der Verbrennungsluft-Zuführleitung 162 und dem Luftvorwärmer 152 auch die Verbrennungsluft-Zwischenleitung 156. Um die Abgas-Abzweigleitung 157 an der engsten Stelle der Verbrennungsluftzufuhr in die Verbrennungsluft-Zuführleitung 162 einmünden lassen zu können, wird der Innenquerschnitt der Verbrennungsluft-Zwischenleitung 156 bei dem dritten Ausführungsbeispiel größer gewählt als der Innendurchmesser der Verbrennungsluft-Zuführleitung 162.

Im übrigen stimmt das dritte Ausführungsbeispiel einer Heizungsanlage 100 hinsichtlich Aufbau und Funktion mit dem ersten Ausführungsbeispiel überein, auf dessen Beschreibung Bezug genommen wird.

## Patentansprüche

1. Verfahren zum Zuführen von Verbrennungsluft zu einem Brenner einer Feuerungsanlage, bei dem der Verbrennungsluft vor dem Eintritt in den Brenner ein Teil eines Abgases der Feuerungsanlage zugemischt wird,
**dadurch gekennzeichnet**,
daß das Abgas der Feuerungsanlage durch einen Restwärmetauscher geführt wird, wobei das Abgas gekühlt wird, und daß ein Teil des gekühlten Abgases der Verbrennungsluft zugemischt wird.

2. Verfahren nach Anspruch 1, dadurch gekennzeichnet, daß der der Verbrennungsluft zugemischte Teil des Abgases ungefähr ein Massenprozent bis ungefähr fünf Massenprozente, vorzugsweise ungefähr ein Massenprozent bis ungefähr drei Massenprozente, des Abgases der Feuerungsanlage beträgt.

3. Verfahren nach einem der Ansprüche 1 oder 2, dadurch gekennzeichnet, daß der zugemischte Teil des Abgases im wesentlichen parallel zur Strömungsrichtung der Verbrennungsluft in die Verbrennungsluft eingeleitet wird.

4. Verfahren nach einem der Ansprüche 1 bis 3, dadurch gekennzeichnet, daß der Teil des Abgases an der engsten Stelle der Verbrennungsluftzufuhr in die Verbrennungsluft eingeleitet wird.

5. Verfahren nach einem der Ansprüche 1 bis 4, dadurch gekennzeichnet, daß das Abgas in dem Restwärmetauscher Wärme an eine Wärmetauschflüssigkeit abgibt.

6. Verfahren nach Anspruch 5, dadurch gekennzeichnet, daß das Abgas in dem Restwärmetauscher unmittelbar mit der Wärmetauschflüssigkeit in Kontakt kommt.

7. Verfahren nach einem der Ansprüche 1 bis 6, dadurch gekennzeichnet, daß die Verbrennungsluft vor dem Eintritt in den Brenner durch einen Luftvorwärmer geführt wird, in dem die Verbrennungsluft erwärmt wird.

8. Verfahren nach Anspruch 7, dadurch gekennzeichnet, daß der Teil des Abgases der Verbrennungsluft vor deren Eintritt in den Luftvorwärmer zugemischt wird.

9. Verfahren nach Anspruch 7, dadurch gekennzeichnet, daß der Teil des Abgases der Verbrennungsluft nach deren Austritt aus dem Luftvorwärmer zugemischt wird.

10. Verfahren nach einem der Ansprüche 7 bis 9, dadurch gekennzeichnet, daß die Verbrennungsluft in dem Luftvorwärmer Wärme aus einer Wärmetauschflüssigkeit aufnimmt.

11. Verfahren nach Anspruch 10, dadurch gekennzeichnet, daß die Verbrennungsluft in dem Luftvorwärmer unmittelbar mit der Wärmetauschflüssigkeit in Kontakt kommt.

12. Verfahren nach einem der Ansprüche 10 oder 11, dadurch gekennzeichnet, daß im Abgas enthaltener Wasserdampf in dem Restwärmetauscher zumindest teilweise zu einem Kondensat kondensiert und daß das Kondensat dem Luftvorwärmer als Wärmetauschflüssigkeit zugeführt wird.

13. Vorrichtung zum Zuführen von Verbrennungsluft zu einem Brenner einer Feuerungsanlage, umfassend eine Einrichtung zum Zumischen eines Teils eines Abgases der Feuerungsanlage zu der Verbrennungsluft vor deren Eintritt in den Brenner, dadurch gekennzeichnet, daß die Vorrichtung einen von dem Abgas der Feuerungsanlage durchströmten Restwärmetauscher (112) umfaßt, in dem das Abgas kühlbar ist, und daß die Einrichtung zum Zumischen eines Teils des Abgases eine in Strömungsrichtung des Abgases hinter dem Restwärmetauscher (112) von einer Abgasleitung (128) abzweigende Abgas-Abzweigleitung (157) umfaßt.

14. Vorrichtung nach Anspruch 13, dadurch gekennzeichnet, daß die Abgas-Abzweigleitung (157) und eine von der Verbrennungsluft durchströmte Verbrennungsluftzufuhr (162, 152, 156) so ausgebildet sind, daß der der Verbrennungsluft durch die Abgas-Abzweigleitung (157) zugemischte Teil des Abgases ungefähr ein Massenprozent bis ungefähr fünf Massenprozente, vorzugsweise ungefähr ein Massenprozent bis ungefähr drei Massenprozente, des die Abgasleitung (128) durchströmenden Abgases der Feuerungsanlage beträgt.

15. Vorrichtung nach einem der Ansprüche 13 oder 14, dadurch gekennzeichnet, daß die Abgas-Abzweigleitung (157) an einer Mündungsöffnung (159) in die Verbrennungsluftzufuhr (162, 152, 156) mündet und daß die Längsachse eines an die Mündungsöffnung (159) angrenzenden Abschnitts (161) der Abgas-Abzweigleitung (157) im wesentlichen parallel zu der Längsachse der Verbrennungsluftzufuhr (162, 152, 156) im Bereich der Mündungsöffnung (159) ausgerichtet ist.

16. Vorrichtung nach einem der Ansprüche 13 bis 15, dadurch gekennzeichnet, daß eine Mündungsöffnung (159), an der die Abgas-Abzweigleitung (157) in die Verbrennungsluftzufuhr (162, 152, 156) mündet, an der engsten Stelle der Verbrennungsluftzufuhr (162, 152, 156) angeordnet ist.

17. Vorrichtung nach einem der Ansprüche 13 bis 16, dadurch gekennzeichnet, daß in dem Restwärmetauscher (112) Wärme von dem Abgas an eine Wärmetauschflüssigkeit übertragbar ist.

18. Vorrichtung nach Anspruch 17, dadurch gekennzeichnet, daß das Abgas in dem Restwärmetauscher (112) unmittelbar in Kontakt mit der Wärmetauschflüssigkeit bringbar ist.

19. Vorrichtung nach einem der Ansprüche 13 bis 18, dadurch gekennzeichnet, daß die Vorrichtung einen von der Verbrennungsluft vor deren Eintritt in den Brenner (102) durchströmten Luftvorwärmer (152) umfaßt, in dem Wärme von einer Wärmetauschflüssigkeit an die Verbrennungsluft übertragbar ist.

20. Vorrichtung nach Anspruch 19, dadurch gekennzeichnet, daß die Abgas-Abzweigleitung (157) in Strömungsrichtung vor dem Luftvorwärmer (152) in die Luftzufuhr (162, 152, 156) einmündet.

21. Vorrichtung nach Anspruch 19, dadurch gekennzeichnet, daß die Abgas-Abzweigleitung (157) in Strömungsrichtung nach dem Luftvorwärmer (152) in die Luftzufuhr (162, 152, 156) einmündet.

22. Vorrichtung nach einem der Ansprüche 19 bis 21, dadurch gekennzeichnet, daß in dem Luftvorwärmer (152) Wärme von einer Wärmetauschflüssigkeit an die Verbrennungsluft übertragbar ist.

23. Vorrichtung nach Anspruch 22, dadurch gekennzeichnet, daß die Verbrennungsluft in dem Luftvorwärmer (152) unmittelbar in Kontakt mit der Wärmetauschflüssigkeit bringbar ist.

24. Vorrichtung nach einem der Ansprüche 22 oder 23, dadurch gekennzeichnet, daß das Abgas in dem Restwärmetauscher (112) zumindest teilweise zu einem Kondensat kondensierbar ist und daß das Kondensat dem Luftvorwärmer (152) als Wärmetauschflüssigkeit zuführbar ist.
